# EUROPEAN PATENT APPLICATION

(11) **EP 4 822 205 A1**
(43) Date of publication of application: **14.10.2026**
(21) Application number: 25168781.0
(22) Date of filing: 07.04.2025
(51) Int. Cl.: F16D 65/097, F16D 55/22

(54) **RETAINING SPRING FOR A DISC BRAKE FOR A VEHICLE, IN PARTICULAR UTILITY VEHICLE, BRAKE CALIPER, DISC BRAKE, BRAKING SYSTEM, AND VEHICLE**

(71) Applicant: ZF CV Systems Europe BV, 1170 Brüssel (BE)
(72) Inventor: STRZALA, Wieslaw, 46-220 Byczyna (PL); COHRS, Jan, 29649 Wietzendorf (DE)
(74) Representative: Ohlendorf, Henrike

(57) **Abstract**

Retaining spring (100) for a disc brake (250) for a vehicle (200a), in particular utility vehicle (200b); wherein the spring (100) comprises a band-shaped body (110); the body (110) is made of metal; the spring (100) comprises a first end (111) and a second end (112); the body (110) extends between the first end (111) and the second end (112); the spring (100) comprises a first bend (105) at which the body (110) is curved in a first bending direction (b1); the spring (100) comprises a second bend (106) between the first bend (105) and the second end (112) and at which the body (110) is curved in a second bending direction (b2) opposite to the first bending direction (b1); and the spring (100) comprises a third bend (107) between the second bend (106) and the second end (112) and at which the body (110) is curved in the first bending direction (b1).

## Description

The disclosure relates to a retaining spring for disc brake for a vehicle, in particular utility vehicle. The disclosure also relates to a brake caliper for a disc brake for a vehicle, in particular utility vehicle, to a disc brake for a vehicle, in particular utility vehicle, to a braking system for a vehicle, in particular utility vehicle, and to a vehicle, in particular utility vehicle.

Disc brakes are known in the prior art. Therein, such a disc brake typically comprises a pair of brake pads and a brake rotor with a ring-shaped braking surface that is adapted to rotate relative to the pair of brake pads. The brake pads may be brought into interaction with the ring-shaped braking surface to produce a braking moment and/or braking force. The interaction between the brake pads and the braking surface implies that brake particles may be released from the brake pads and/or the braking surface by an abrasive friction between the brake pads and the braking surface. These particles are referred to as brake dust.

It is known from the prior art that brake dust and/or brake particles may be collected so that an emission of the brake particles in an environment may be reduced and/or minimized. Brake particles may be collected and/or caught in an active way, e.g., by so-called active suction system. Such an active suction system requires a source of energy to run to catch the brake particles. Brake particles may be collected in a passive way, e.g., by collecting particles without such a suction system.

Conventionally, the brake rotor of a disc brake may be disc-shaped.

DE 10 2006 051 972 A1 relates to a brake dust collector for a disc brake comprising a brake disc and a brake caliper clasping the latter. The brake dust collector includes a housing designed to clasp a portion of the brake disc directly adjoining the brake caliper in the main direction of rotation of the brake disc. Provided arranged in the housing is a brake dust retainer comprising a plurality of brake dust intake ports.

FR 1 341 744 discloses a disc brake having at least one brake caliper embracing a rotating brake disc and brake shoes arranged on both sides of the brake disc and controlled mechanically, hydraulically or electrically, are mounted in such a way that the brake shoes can be moved in an axial direction.

It is also known that the brake rotor has a more complex geometry, i.e., a non-ring-shaped shape. However, the brake rotor may comprise a braking surface that may be ring-shaped and the mechanisms to bring the brake pads into interaction with the braking surface may be similar to mechanisms of disc brakes with disc-shaped brake rotors. Thus, also brakes with rotors with a more complex geometry may be referred to as disc brake.

DE 3446743 discloses a disc brake and a method for its assembly.

DE 39 31 868 A1 discloses a wheel-brake arrangement is for disc brakes. The ring-shaped braking disc is formed as one piece with a brake disc carrier. The wheel rim and wheel disc are made as separate parts and in the transition area where the wheel disc merges into the rim, the wheel disc, wheel rim and brake disc carrier are all centred and joined together by means of a screw.

Such a disc brake with a brake rotor with a more complex geometry may be used to further reduce brake particles to be emitted into an environment. By limiting emission from brakes, an environmental transportation footprint may be lowered.

For example, German patent application DE 10 2024 121 821.5 describes a brake disc for a vehicle, comprising a friction ring which is supported on a brake disc carrier, wherein the friction ring and the brake disc carrier are interconnected at an outer circumference and the brake disc carrier covers the friction ring unilaterally, wherein a encapsulation element for receiving brake particle covers the friction ring.

The disc brake German patent application DE 10 2024 121 821.5 may also be referred to as encapsulated disc brake.

One of the benefits of such an encapsulated disc brake may be a larger friction radius at which the brake pads are to be brought into contact with the rotor. This may enable to reach a larger braking torque with a smaller clamping force compared to a conventional disk brake with a disc-shaped rotor.

However, the brakes pads in such an encapsulated disc brake is positioned radially more outwardly than in a conventional disk brake with a disc-shaped rotor which leaves less space for a retaining spring arrange, e.g., on the top of the brake pad. Thus, the requirement of a retaining spring may imply a less outwardly arrangement and thus may lower the possible friction radius. Alternatively, a retaining spring may be arranged side-by-side with the brake pads parallel to an axis. This, however, would lead to a more complex geometry and to more components

In the light of the prior art, it is an object of the disclosure to provide a contribution to the prior art. In particular, an object of the disclosure is to provide a constructive-space effective arrangement of the retaining spring.

The object is solved by the subject-matter according to independent claim 1 and according to the remaining independent claims. Dependent claims relate to preferred embodiments.

According to an aspect of the present disclosure, a retaining spring for a disc brake for a vehicle, in particular utility vehicle, is provided; wherein the spring comprises a band-shaped body; the body is made of metal; the spring comprises a first end and a second end; the body extends between the first end and the second end; the spring comprises a first bend at which the body is curved in a first bending direction; the spring comprises a second bend between the first bend and the second end and at which the body is curved in a second bending direction opposite to the first bending direction; and the spring comprises a third bend between the second bend and the second end and at which the body is curved in the first bending direction.

The retaining spring comprises a band-shaped body. I.e., the retaining spring may be in form of a steel strip. This enables a construction-space configuration of the retaining spring. The retaining spring comprises three bends, namely the first bend, the second bend the third bend, wherein the second bend is opposite to the first bend and the third bend is opposite to second bend. The three bends achieve that the retaining spring may be compressed in two stages. a first stage until the second bend touches a base of the spring and a second stage with another spring rate and/or elastic properties. Therein, the first stage may be effective during an assembly of the retaining spring and the second stage may be effective during use of the retaining spring to position a brake pad relative to a brake caliper.

In other words, the disclosure provides a retaining spring which may be adapted to be arranged between a brake pad and a caliper and optionally to be positioned parallel to an axle axis. The retaining spring may thus achieve an enlarged maximum friction radius and may enable, due to the parallel arrangement, an efficient assembly and/or disassembly independent from brake position, i.e., the relative position of the brake pads and/or the brake caliper. Thus, the retaining spring enables a constructive-space effective arrangement. Further, the retaining spring may help to limit a residual drag torque.

Optionally, wherein the spring is a flat spring. A flat spring according to the disclosure is a mechanical component designed to store and release energy when deformed. The flat spring may comprise a flat or nearly flat piece of material, such as sheet metal, that may be compressed or bent. With a flat spring it is achieved that a spring mechanism may, due to its reduced height profile, be integrated into tight and/or narrow space between the brake pad and the brake caliper.

Optionally, the retaining spring is adapted to exhibit a force-displacement relation with a knee. A force-displacement relation with a knee according to the disclosure is a characteristic curve that depicts the relationship between the force applied to an object and the corresponding displacement, featuring a distinct non-linear region known as the 'knee'. The knee represents a transition point at which a change in stiffness of the retaining spring occurs and at which the first stage of compression and the second stage of compression are delimited from each other.

Optionally, the force-displacement relation relates to a compression and/or displacement of the second end towards the first end. The compression of the retaining spring may in practice be translated with a displacement of the second and towards the first end. Thus, the force-displacement relation may describe the characteristics of the retaining spring in a particularly useful manner.

Optionally, the retaining spring comprises a first hook at the first end. Therein, the hook may be integrally formed with the body. The hook may be produced by stamping. The hook may be bent with angle between 25 and 90 degrees from the body. The hook may achieve a mechanical fixation of the first end.

Optionally, the retaining spring comprises a second hook at the first bend. Therein, the hook may be integrally formed with the body. The hook may be produced by stamping. The hook may be bent with angle between 25 and 90 degrees from the body. The hook may achieve a mechanical fixation of the first bend.

According to an aspect of the disclosure, a brake caliper for a disc brake for a vehicle, in particular utility vehicle, is provided; wherein the brake caliper is adapted to receive a brake pad; the brake caliper comprises a receiving section for receiving a retaining spring according to the disclosure; wherein the retaining spring is adapted and arranged to press the brake pad away from the brake caliper. Optionally, the retaining spring comprises one or more optional and/or preferred features as described with reference to the disclosure to achieve a corresponding technical effect.

Optionally, the receiving section is adapted to receive a retaining spring that comprises one or more features as described as optional and/or preferred to achieve a corresponding technical effect.

Optionally, the brake caliper is adapted to receive the retaining spring radially inwardly from the brake pad and/or the receiving section is arranged radially inwardly from the brake pad. This may enable an effective arrangement of the retaining spring to exert a radially outwardly directed force from the brake caliper to the brake pad.

Optionally, the receiving section comprises a groove for arranging the body between the first end and the first bend at least partially within the groove. The groove may enable a reliable mechanical fixation of the retaining spring at the brake caliper.

Optionally, the receiving section comprises an axial extension being less than or equal to an axial distance between the first hook and the second hook; and/or the receiving section is adapted to receive the retaining spring with an orientation so that the retaining spring is extended parallel to an axis of the disc brake. This may enable that the receiving section may fixated the retaining spring via hooks of the retaining spring.

An advantage of the retaining spring is that when the brake caliper is moved in a maintenance position, i.e., a position at which it is possible to assemble and/or disassemble brake pad, the retaining spring may be in a position in which the retaining spring may be unable to fall out, even when the disc brake would be up-side down. In this position, the retaining spring has limited movement in an axial direction due to hooks, limited movement in a radial direction due to rotor and caliper and limited movement in a lateral direction due to being placed in the groove in caliper.

According to an aspect of the disclosure, a disc brake for a vehicle, in particular utility vehicle, is provided wherein the disc brake comprises a brake carrier; the disc brake comprises a brake caliper arranged on the brake carrier and being configured according to the disclosure; the disc brake comprises a brake rotor adapted to rotate relative to the brake caliper; the disc brake comprises brake pads arranged on the brake caliper and adapted to be axially moved; and the retaining spring according to the disclosure.

Optionally, the brake caliper and/or the retaining spring comprises one or more optional and/or preferred features as described with reference to the disclosure to achieve a corresponding technical effect.

The brake pad and the brake carrier are optionally adapted to realize a form-fit connection between the brake pad and the brake carrier. This may achieve that the brake pad is at least in outward radial direction prevented from moving and may be pressed by the retaining spring in a, by the form-fit connection, well-defined position. Additionally or alternatively, the form-fit connection may limit a radially inward movement of the brake pad.

Optionally, the brake pad and the retaining spring are arranged so that a contact section between the third bend and the second end enclose an angle of 0° or more with the brake pad. Therein, the third bend may be smaller which leads to a closer second end to the brake caliper. This may achieve that the brake pad and the contact section may enclose a small but non-zero angle. This may achieve, in the assembled state, besides a force for pushing the brake pad radially outwardly also a force which pushes the brake pad back, i.e., away from the rotor. This may support to move the brake pad away from the rotor after braking application stop and thus reducing potential drag torque.

Optionally, the disc brake is an encapsulated disc brake. Optionally, the brake rotor of the encapsulated disc brake, may essentially, be configured as described in DE 10 2024 121 821.5.

According to an aspect of the disclosure, a pneumatic braking system is provided, comprising a retaining spring according to the disclosure, a brake caliper according to the disclosure and/or a disc brake according to the disclosure.

Optionally, the disc brake, the brake caliper and/or the retaining spring comprises one or more optional and/or preferred features as described with reference to the disclosure to achieve a corresponding technical effect.

According to an aspect of the disclosure, a vehicle, in particular utility vehicle, is provided, comprising a retaining spring according to the disclosure, a brake caliper according to the disclosure, a disc brake according to the disclosure and/or a pneumatic braking system according to the disclosure.

Optionally, the vehicle, in particular utility vehicle, the disc brake, the brake caliper and/or the retaining spring comprises one or more optional and/or preferred features as described with reference to the disclosure to achieve a corresponding technical effect.

The figures show preferred embodiments as follows:
Fig. 1 a schematic of a vehicle, in particular utility vehicle, according to an embodiment of the disclosure;
Fig. 2 a schematic of a perspective view of a disc brake according to an embodiment of the disclosure;
Fig. 3 a schematic of a sectional view of a detail of a disc brake according to an embodiment of the disclosure;
Fig. 4 a perspective view of a retaining spring according to embodiment of the disclosure;
Fig. 5 a schematic of a sectional view of a detail of a disc brake according to an embodiment of the disclosure;
Fig. 6 a schematic of a force-displacement relation of a retaining spring according to an embodiment of the disclosure;
Fig. 7 schematics of a sectional view of a detail each of a disc brake according to an embodiment of the disclosure;
Fig. 8 a detail of a brake caliper according to an embodiment of the disclosure; and
Fig. 9 a schematic of a sectional view of a detail of a disc brake according to an embodiment of the disclosure.

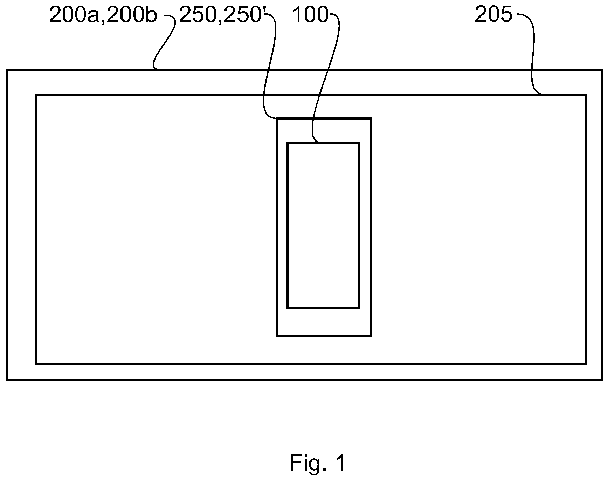

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination, a bus and/or a passenger car.

The vehicle 200a, 200b comprises a braking system 205. The braking system 205 is adapted to be actuated by a driver of the vehicle 200a, 200b and/or by an autonomous driving function of the vehicle 200a, 200b to apply and/or release a braking torque. The braking system 205 may be a pneumatic braking system 205, a electronic braking system 205, a hydraulic braking system 205 and/or electronically assisted.

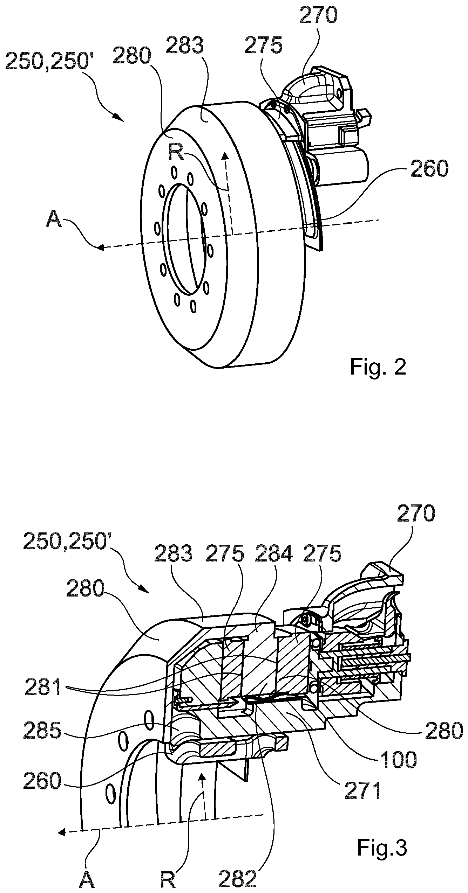

The braking system 205 comprises a disc brake 250. The disc brake 250 is an encapsulated disc brake 250'. The disc brake 250 comprises a retaining spring 100. Further features of the disc brake 250 and the retaining spring 100 are described under reference to Figures 2 to 9.

Figure 2 shows a schematic of a perspective view of a disc brake 250 according to an embodiment of the disclosure. The disc brake 250 of Figure 2 is an encapsulated disc brake 250' for a vehicle 200a, in particular utility vehicle 200b. Such a disc brake 250 and such a vehicle 200a, 200b is described with reference to Figure 1. Figure 2 is described under reference to Figure 1.

The disc brake 250 is essentially configured as described in DE 10 2024 121 821.5. The disc brake 250 comprises a brake carrier 260. The brake carrier 260 is mounted to a non-rotating part of the vehicle 200a, 200b.

The disc brake 250 comprises a brake caliper 270 arranged on the brake carrier 260. The brake caliper 270 may be a so-called floating brake caliper 270 and may be adapted to move upon an actuation of the disc brake 250 axially, i.e., parallel to an axis A. Alternatively, the brake caliper 270 may be fixed.

The disc brake 250 comprises a brake rotor 280 adapted to rotate relative to the brake caliper 270. The rotation of the brake rotor 280 defines a rotation direction, wherein the rotation direction relates to a rotational motion of the brake rotor 280 when the vehicle 200a, 200b drives in a forward direction. The axis A is the axis of rotation. A radial direction R is defined perpendicular to the axis A.

Figure 3 shows a schematic of a sectional view of a disc brake 250 according to an embodiment of the disclosure. The disc brake 250 of Figure 3 is the disc brake 250 of Figure 2. Figure 3 is described under reference to Figures 1 to 2.

The brake rotor 280 comprising a friction ring 282 which is supported on a brake disc carrier 283. The friction ring 282 and the brake disc carrier 283 are interconnected at an outer circumference 284 of the rotor 280. The brake disc carrier 283 covers the friction ring 282 unilaterally. The brake rotor 280 is adapted to partially provide an encapsulated volume 285. The disc brake 250 further comprises one or more covers (not shown) to provide the encapsulated volume 285.

The disc brake 250 comprises brake pads 275 arranged on the brake caliper 270 and adapted to be axially moved. By the axial movement of the brake pads 275, the brake pads 275 are adapted to be brought into interaction with the brake rotor 280, in particular with the friction ring 282. The friction ring 282 comprises a ring-shaped braking surface 281. The brake pads 275 and the braking surface 281 are adapted to interact with each other to achieve a braking force.

The encapsulated volume 285 is encapsulated by the brake rotor 280, one or more brake covers (not shown), the brake caliper 270 and the brake carrier 260. The brake pads 275 are arranged within the encapsulated volume 285. Thus, brake particles may be created within the encapsulated volume 285.

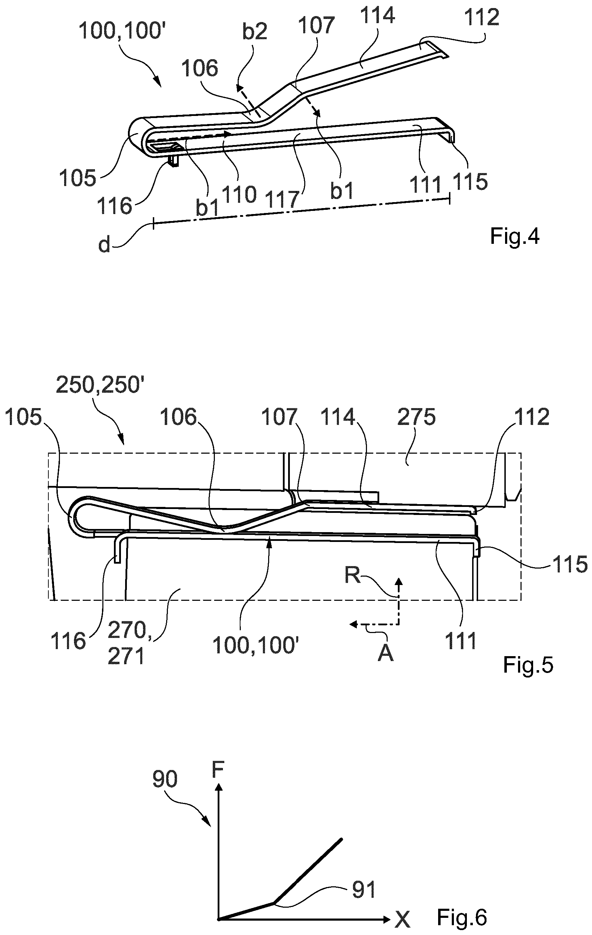

The disc brake 250 comprises the retaining spring 100. Further features of the disc brake 250 and of the retaining spring 100 are described with reference to Figures 4 to 9.

Figure 4 shows a perspective view of a retaining spring 100 according to embodiment of the disclosure. The retaining spring 100 of Figure 4 is a retaining spring 100 for a disc brake 250 for a vehicle 200a, in particular utility vehicle 200b. Such a disc brake 250 and vehicle 200a, 200b is described with reference to Figures 1 to 3. In particular, the retaining spring 100 of Figure 4 is the retaining spring 100 of Figure 3. Figure 4 is described in the reference to Figures 1 to 3.

The spring 100 comprises a band-shaped body 110. I.e. the body 110 of the spring 100 is essentially flat, elongated and comprises two principial surfaces, wherein the principial surfaces are the surfaces of the body 110 with the largest extension.

The body 110 is made of metal. In particular, the body 110 is made of sheet metal. Alternatively, the body 110 is made of composite materials.

The spring 100 is a flat spring 100'. A flat spring according to the disclosure is a mechanical component made that is designed to store and release energy through flexure, deformation and/or displacement.

The spring 100 comprises a first end 111 and a second end 112. The body 110 extends between the first end 111 and the second end 112. I.e., the two principal surfaces are extended between the first and 111 and the second end 112.

The spring 100 comprises a first bend 105 at which the body 110 is curved in a first bending direction b1. At the first bend 105, the body 110 of the spring 100 is bent about 180 degree. The first bending direction b1 corresponds to bending the first end 111 towards the second end 112. In other words, the first bending direction b1 corresponds to bending the body 110 to bring one of the two principal surfaces towards itself.

The spring 100 comprises a second bend 106 between the first bend 105 and the second end 112 and at which the body 110 is curved in a second bending direction b2 opposite to the first bending direction b1. At the second bend 106, the body 110 of the spring 100 is bent about less than 90 degree. The second bending direction b2 corresponds to bending the first end 111 and the second end 112 away from each other. In other words, the second bending direction b2 corresponds to bending the body 110 to bring one of the two principal surfaces away from itself.

The spring 100 comprises a third bend 107 between the second bend 106 and the second end 112 and at which the body 110 is curved in the first bending direction b1. At the third bend 107, the body 110 of the spring 100 is bent about less than 90 degree.

Along the body 110, the first bend 105, the second bend 106 and the third bend 107 are ordered. Namely, from the first end 111 to the second 112, the first bend 105, the second bend 106 and the third bend 107 are arranged in the following order: the first bend 105, the second bend 106 and the third bend 107.

The retaining spring 100 is adapted to exhibit a force-displacement relation 90 with a knee 91 (see Figure 6). The knee 91 is characterized by the second bend 106 contacting a base 117 of the spring 100, wherein the base 117 is arranged between the first end 111 and the first bend 105. The base 117 is a section of a principal surface of the body 110.

The retaining spring 100 comprises a first hook 115 at the first end 111. The first hook 115 is a part of the body 110 that deviates from the base 117. The first hook 115 bends away from the second end 112.

The retaining spring 100 comprises a second hook 116 at the first bend 105. The second hook 116 is a part of the body 110 that deviates from the base 117. The second hook 116 bends away from the first bend 105.

Figure 5 shows a schematic of a sectional view of a detail of a disc brake 250 according to an embodiment of the disclosure. The disc brake 250 of Figure 5 is a disc brake 250 of a vehicle 200a, in particular utility vehicle 200b. Such a disc brake 250 and vehicle 200a, in particular utility vehicle 200b, is described with reference to Figures 1 to 3. In particular, the disc brake 250 of Figure 5 is the disc brake 250 as illustrated in Figures 2 and 3. The disc brake 250 comprises the retaining spring 100 as described with reference to Figure 4. Figure 5 is described under reference to Figures 1 to 4.

The brake caliper 270 is adapted to receive a brake pad 275. As an example, the brake pad 275 is an inboard brake pad 275. The brake caliper 270 comprises a receiving section 271. The receiving section 271 is adapted to receive the retaining spring 100. The receiving section 271 is arranged to face the brake pad 275. The receiving section 271 provides a radially outwardly section of the brake caliper 270. The brake caliper 270 is adapted to receive the retaining spring 100 radially inwardly from the brake pad 275. The receiving section 271 is arranged radially inwardly from the brake pad 275.

The retaining spring 100 is adapted and arranged to press the brake pad 275 away from the brake caliper 270. In other words, the retaining spring 100 is compressed, i.e., the first end 111 is deflected towards the second end 112, so that a repelling elastic force is exerted between the brake caliper 270 and the brake pad 275.

The brake caliper 270 may comprise a plurality of retaining sections 271 to receive a plurality of retaining springs 100. It is possible to provide more than one retaining spring 100 per brake pad 275.

Figure 6 shows a schematic of a force-displacement relation 90 of a retaining spring 100 according to an embodiment of the disclosure. The force-displacement relation 90 of Figure 6 is related to the retaining spring 100 as shown in Figures 3 to 5. Figure 6 is described under reference to Figures 1 to 5.

The force-displacement relation 90 relates to a compression and/or displacement x of the second end 112 towards the first end 111. Therein, the force-displacement relation 90 comprises a knee 91. The knee 91 separates the first compression stage at comparatively low compression and/or displacement x from a second compression stage at comparatively large compression and/or displacement x. Therein, the first compression stage is characterized by an onset of compression and/or displacement x until the second bend 106 touches the base 117. The second compression stage is characterized by a further compression and/or displacement x after the second bend 106 attached the base 117.

The force-displacement relation 90 is exemplary. The force-displacement relation 90 may also comprise one or more non-linear compression stages.

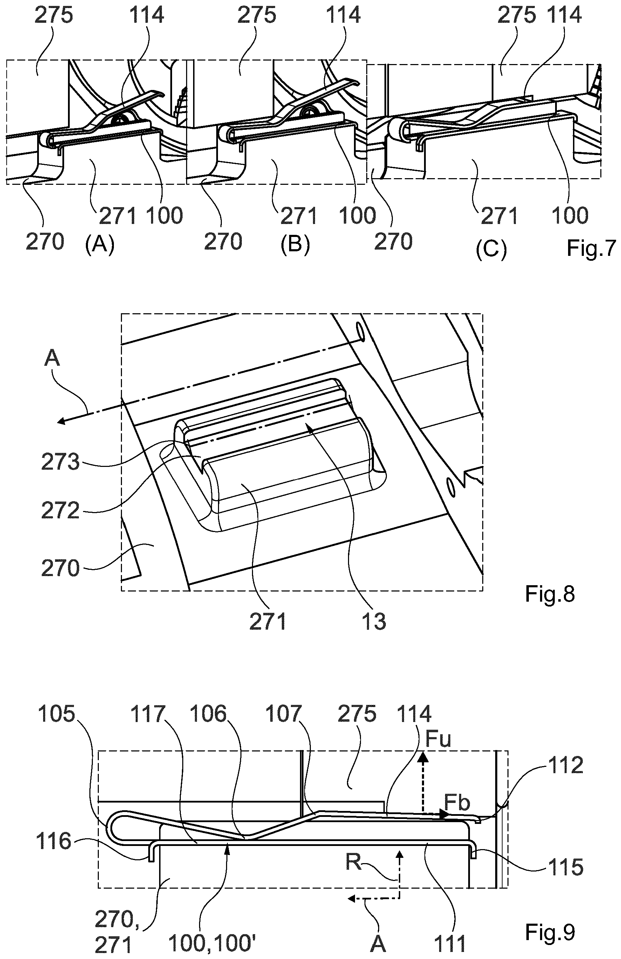

Figure 7 shows schematics of a sectional view of a detail each of a disc brake 250 according to an embodiment of the disclosure. Figure 7 illustrates an assembly of the disc brake 250 as shown in Figures 2, 3 and 5. Figure 7 is described under reference to Figures 1 to 6. Therein, Figure 7 is subdivided into three sections (A), (B) and (C).

In section (A), the retaining spring 100 is received by the receiving section 271. In section (B), the brake pad 275 is moved parallel to the axis A. In section (C), the brake pad 275 is assembled and contacts the retaining spring 100 at the contact section 114.

Figure 8 shows a detail of a brake caliper 270 according to an embodiment of the disclosure. The brake caliper 270 of Figure 8 is the brake caliper 270 as shown in Figures 2, 3, 5 and 7. Figure 8 is described under reference to Figures 1 to 7.

The receiving section 271 comprises a groove 272 for arranging the body 110 between the first end 111 and the first bend 106 at least partially within the groove 272. The groove 272 is oriented in parallel to the axis A.

The receiving section 271 comprises an axial extension 273 being less than or equal to an axial distance d (see Figure 4) between the first hook 115 and the second hook 116. Thus, the first hook 115 and the second hook 116 may be used to fixated the retaining spring 100 and the receiving section 271. The groove 272 prevents the retaining spring 100 from a movement perpendicular to the axis A. The receiving section 271 is adapted to receive the retaining spring 100 with an orientation so that the retaining spring 100 is extended parallel to an axis A of the disc brake 250.

Figure 9 shows a schematic of a sectional view of a detail of a disc brake 250 according to an embodiment of the disclosure. The disc brake 250 of Figure 9 comprises a retaining spring 100 which is an alternative embodiment of the retaining spring 100 compared to the retaining spring 100 as illustrated in Figures 3 to 7. Figure 9 is described under reference to Figures 1 to 8, wherein differences between the retaining springs 100 are described.

The brake pad 275 and the retaining spring 100 are arranged so that the contact section 114 between the third bend 106 and the second end 112 enclose an angle of 0° or more with the brake pad 275. This may achieve that, in the assembled state, besides a normal force FU for pushing the brake pad 275 radially outwardly also a tangential force FB which pushes the brake pad 275 parallel to the axis A is created.

### List of reference signs (Part of the description)

- 90: force-displacement relation
- 91: knee

- 100: retaining spring
- 100': flat spring
- 105: first bend
- 106: second bend
- 107: third bend
- 110: body
- 111: first end
- 112: second end
- 114: contact section
- 115: first hook
- 116: second hook
- 117: base

- 200a: vehicle
- 200b: utility vehicle
- 205: braking system

- 250: disc brake
- 250': encapsulated disc brake
- 260: brake carrier
- 270: brake caliper
- 271: receiving section
- 272: groove
- 273: axial extension
- 275: brake pad
- 280: brake rotor
- 281: braking surface
- 282: friction ring
- 283: brake disc carrier
- 284: outer circumference
- 285: encapsulated volume

- A: axis
- b1: first bending direction
- b2: second bending direction
- d: distance
- F: force
- Fu: normal force
- Fb: tangential force
- R: rotation direction
- x: compression and/or displacement

## Claims

1. Retaining spring (100) for a disc brake (250) for a vehicle (200a), in particular utility vehicle (200b); wherein
- the spring (100) comprises a band-shaped body (110);
- the body (110) is made of metal;
- the spring (100) comprises a first end (111) and a second end (112);
- the body (110) extends between the first end (111) and the second end (112);
- the spring (100) comprises a first bend (105) at which the body (110) is curved in a first bending direction (b1), **characterized in that**,
- the spring (100) comprises a second bend (106) between the first bend (105) and the second end (112) and at which the body (110) is curved in a second bending direction (b2) opposite to the first bending direction (b1); and
- the spring (100) comprises a third bend (107) between the second bend (106) and the second end (112) and at which the body (110) is curved in the first bending direction (b1).

2. Retaining spring (100) as claimed in claim 1, wherein
- wherein the spring (100) is a flat spring (100').

3. Retaining spring (100) as claimed in claim 1 or 2, wherein
- the retaining spring (100) is adapted to exhibit a force-displacement relation (90) with a knee (91).

4. Retaining spring (100) as claimed in claim 3, wherein
- the force-displacement relation (90) relates to a compression and/or displacement (x) of the second end (112) towards the first end (111).

5. Retaining spring (100) as claimed in any one of the preceding claims, wherein
- the retaining spring (100) comprises a first hook (115) at the first end (111).

6. Retaining spring (100) as claimed in any one of the preceding claims, wherein
- the retaining spring (100) comprises a second hook (116) at the first bend (105).

7. Brake caliper (270) for a disc brake (250) for a vehicle (200a), in particular utility vehicle (200b); wherein
- the brake caliper (270) is adapted to receive a brake pad (275);
- the brake caliper (270) comprises a receiving section (271) for receiving a retaining spring (100) as claimed in any one of the preceding claims;
- wherein the retaining spring (100) is adapted and arranged to press the brake pad (275) away from the brake caliper (270).

8. Brake caliper (270) as claimed in claim 7, wherein
- the brake caliper (270) is adapted to receive the retaining spring (100) radially inwardly from the brake pad (275) and/or
- the receiving section (271) is arranged radially inwardly from the brake pad (275).

9. Brake caliper (270) as claimed in claim 7 or 8, wherein
- the receiving section (271) comprises a groove (272) for arranging the body (110) between the first end (111) and the first bend (106) at least partially within the groove (272).

10. Brake caliper (270) as claimed in any one of claims 7 to 9; wherein
- the receiving section (271) comprises an axial extension (273) being less than or equal to an axial distance (d) between the first hook (115) and the second hook (116); and/or
- the receiving section (271) is adapted to receive the retaining spring (100) with an orientation so that the retaining spring (100) is extended parallel to an axis (A) of the disc brake (250).

11. Disc brake (250) for a vehicle (200a), in particular utility vehicle (200b); wherein
- the disc brake (250) comprises a brake carrier (260);
- the disc brake (250) comprises a brake caliper (270) arranged on the brake carrier (260) and being configured according to any one of claims 7 to 10;
- the disc brake (250) comprises a brake rotor (280) adapted to rotate relative to the brake caliper (270);
- the disc brake (250) comprises brake pads (275) arranged on the brake caliper (270) and adapted to be axially moved; and
- the retaining spring (100) as claimed in any one of claims 1 to 6.

12. Disc brake (250) as claimed in claim 11; wherein
- the brake pad (275) and the retaining spring (100) are arranged so that a contact section (114) between the third bend (106) and the second end (112) enclose an angle of 0° or more with the brake pad (275).

13. Disc brake (250) as claimed claim 11 or 12, wherein
- the disc brake (250) is an encapsulated disc brake (250').

14. Pneumatic braking system (205), comprising a retaining spring (100) as claimed in any one of claims 1 to 6, a brake caliper (270) as claimed in any one of claims 7 to 10 and/or a disc brake (250) as claimed in any one of claims 11 to 13.

15. Vehicle (200a), in particular utility vehicle (200b), comprising a retaining spring (100) as claimed in any one of claims 1 to 6, a brake caliper (270) as claimed in any one of claims 7 to 10, a disc brake (250) as claimed in any one of claims 11 to 13 and/or a pneumatic braking system (205) as claimed in claim 14.
